# FASCICULE DE BREVET EUROPEEN

(11) **EP 1 787 041 B1**
(45) Date de publication et mention de la délivrance du brevet: **30.07.2008**
(21) Numéro de dépôt: 05716444.4
(22) Date de dépôt: 30.03.2005
(51) Int. Cl.: F16F 1/373, B60S 1/04

(54) **AGENCEMENT POUR LA FIXATION D'UN MECANISME D'ESSUYAGE**
ANORDNUNG ZUR BEFESTIGUNG EINES WISCHERMECHANISMUS
ARRANGEMENT FOR FIXING A WIPING MECHANISM

(30) Priorité: 01.04.2004 FR 0403462
(43) Date de publication de la demande: 23.05.2007
(73) Titulaire: VALEO SYSTEMES D'ESSUYAGE, 78321 La Verrière (FR)
(72) Inventeur: COLLINET, Laurent, F-86270 La Roche Posay (FR); MORIN, Pascal, F-86100 Châtellerault (FR)
(86) Numéro de dépôt international: PCT/EP2005/003317
(87) Numéro de publication internationale: WO 2005/098260

(56) Documents cités:
- US-A- 5 820 286
- US-A1- 2003 002 919
- US-B1- 6 532 616

## Description

L'invention propose un agencement pour le montage et la fixation d'un mécanisme d'essuyage qui comporte un élément amortisseur, permettant de réduire le bruit généré par les vibrations du mécanisme d'entraînement, ainsi qui d'éventuels défauts de positionnements dus aux déformations élastiques de l'élément amortisseur.

L'invention propose plus particulièrement un agencement pour le montage et la fixation d'une platine de support, notamment d'une platine de support d'un mécanisme d'essuie-glace, à un élément de structure de caisse d'un véhicule automobile, qui comporte :
- une entretoise, de forme globalement cylindrique de révolution d'axe principal vertical (A), qui est fixée à l'élément de structure de caisse, et
- une patte de fixation globalement horizontale qui est réalisée venue de matière avec la platine de support qui s'étend selon une direction principale longitudinale vers l'avant depuis la platine de support et dont l'extrémité longitudinale avant est fixée à l'entretoise par l'intermédiaire d'un élément amortisseur interposé entre la patte de fixation et l'entretoise,
l'agencement étant du type dans lequel :
- l'élément amortisseur est un élément de forme tubulaire coaxial à l'entretoise, dont la paroi cylindrique externe comporte une gorge périphérique contre le fond de laquelle la patte de fixation est en appui,
- l'extrémité avant de la patte de fixation comporte un logement en "C" dans lequel l'élément amortisseur est reçu, qui est délimité par deux tronçons concaves opposés et complémentaires du fond de la gorge périphérique, pour réaliser le positionnement de la patte de fixation coaxialement à l'élément amortisseur, deux tronçons avant dont la distance moyenne entre les tronçons avant est inférieure au diamètre externe du fond de la gorge périphérique pour réaliser le blocage de l'élément amortisseur dans le logement en "C" et tronçon arrière de raccordement des tronçons concaves. Un tel agencement est connu du document US 6 532 616 B1.

Les véhicules automobiles actuels comportent généralement un mécanisme d'entraînement associé à chaque balai d'essuyage, que ce soit le pour l'essuyage d'un panneau vitré transversal arrière, ou bien du pare-brise avant du véhicule.

Chacun de ces mécanismes d'entraînement comporte un arbre d'entraînement du balai d'essuyage qui est entraîné en rotation par un moteur électrique et qui est guidé en rotation par un palier.

De façon connue, le mécanisme d'entraînement est fixé sur une platine qui est elle-même fixée en trois points sur un élément de structure de caisse du véhicule, de façon à permettre l'immobilisation du dispositif d'essuyage, et à empêcher sa rotation par rapport au panneau vitré.

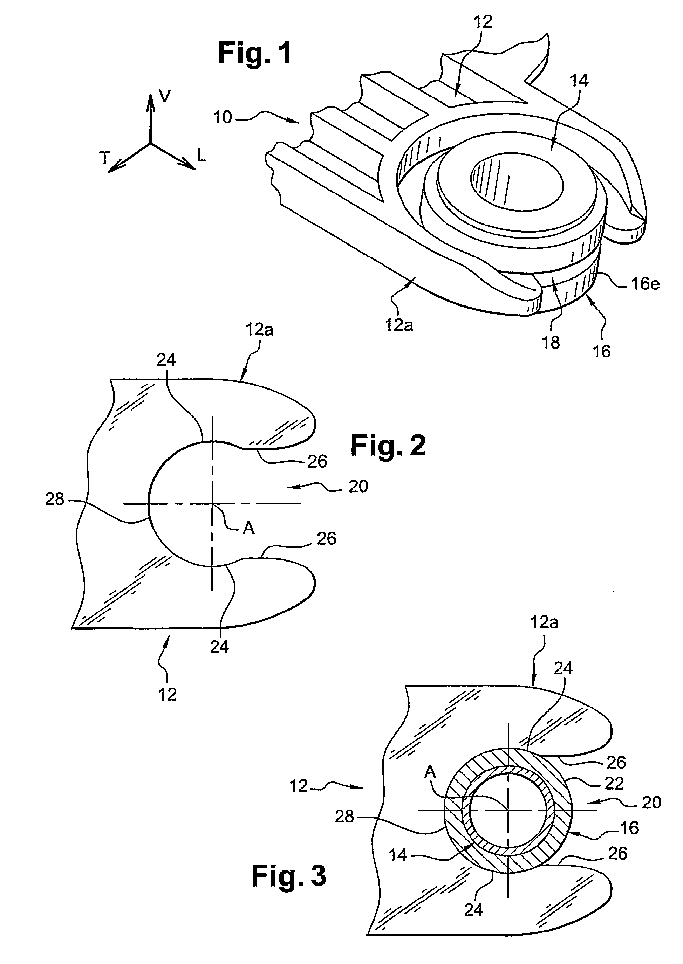

On a représenté aux figures 1 à 3 un exemple de réalisation des moyens utilisés pour le montage et la fixation d'une la platine de support 10 sur un élément de structure de caisse du véhicule.

La platine 10 comporte à cet effet une patte de fixation 12 horizontale qui s'étend longitudinalement vers l'avant, et dont l'extrémité avant libre 12a est fixée à une entretoise 14 de l'élément de structure de caisse, par l'intermédiaire d'un élément amortisseur 16 réalisé en un matériau élastique.

L'élément amortisseur 16 est un élément de forme globalement tubulaire, et sa paroi cylindrique externe 16e comporte une gorge périphérique 18 contre le fond 22 de laquelle l'extrémité libre 12a de la patte de fixation 12 est en appui.

Comme on peut le voir figure 2, le logement 20 est délimité par deux tronçons concaves 24, qui sont opposés axialement, et qui sont complémentaires du fond 22 de la gorge périphérique 18. Ces tronçons concaves 24 coopèrent avec le fond 22 de la gorge périphérique 18, pour réaliser le positionnement de l'extrémité avant 12a de la patte 12 coaxialement à l'élément amortisseur 16.

Le logement 20 est aussi délimité par deux tronçons longitudinaux avant 26, entre lesquels l'élément amortisseur 16 est introduit dans le logement 20. La distance moyenne entre les deux tronçons longitudinaux avant 26 est inférieure au diamètre externe du fond 22 de la gorge périphérique 18, de manière à réaliser le blocage de l'élément amortisseur 16 dans le logement 20.

Enfin, le logement 20 est délimité par un tronçon arrière 28 de raccordement des tronçons concaves 24.

Comme on peut le voir à la figure 3, les tronçons concaves 24 et le tronçon arrière 28 forment un arc de cercle unique centré sur l'axe A de l'entretoise 14, et complémentaire du fond 22 de la gorge périphérique 18.

Ainsi, le tronçon arrière 28 est en appui contre le fond 22 de la gorge périphérique 18.

Or, d'une manière générale, l'élément amortisseur 16 est monté serré dans le logement 20, ce qui provoque une déformation radiale de l'élément amortisseur 16.

Cependant, seule la portion de l'élément amortisseur 16 qui est située entre les deux tronçon avant 26 du logement 20 peut se déformer librement.

L'élément amortisseur 16 ne peut donc pas se déformer d'une manière symétrique par rapport à son axe vertical A, ce qui provoque un décalage radial de la patte de fixation 12, et donc un défaut de positionnement de la platine 10.

L'invention a pour but de proposer un agencement pour le montage de la platine, pour lequel le montage de l'élément amortisseur dans le logement 20 de la patte de fixation 12 ne provoque pas de décalage radial de la patte de fixation 12.

Dans ce but, invention propose un agencement du type décrit précédemment, **caractérisé en ce qu**'il existe un jeu longitudinal entre le tronçon arrière et le fond de la gorge périphérique.

Selon d'autres caractéristiques de l'invention :
chaque tronçon concave consiste en un arc de cercle centré sur l'axe vertical A de l'entretoise ;
   - chaque tronçon concave comporte un décrochement radial d'axe principal transversal ;
   - chaque tronçon concave est symétrique par rapport à un plan transversal axial ;
   - le logement en "C" est symétrique par rapport à un plan longitudinal axial ;
   - l'élément amortisseur comporte un méplat transversal vertical arrière situé en vis-à-vis du tronçon arrière du logement en "C".

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un agencement pour le montage du platine de support conformément aux enseignements de l'art antérieur ;
- la figure 2 est une section horizontale de la patte de fixation représentée à la figure 1 ;
- la figure 3 est une section horizontale de l'agencement représenté à la figure 1 ;
- la figure 4 est une vue similaire à celle de la figure 2, représentant une patte de fixation conforme à l'invention ;
- la figure 5 est une vue similaire à celle de la figure 3, représentant l'agencement comportant la patte de fixation représentée à la figure 4 ;
- la figure 6 est une vue similaire à celle de la figure 2, représentant une patte de fixation conforme à l'invention ;
- la figure 7 est une vue similaire à celle de la figure 3, représentant l'agencement comportant la patte de fixation représentée à la figure 6 ;
- la figure 8 est une vue similaire à celle de la figure 2, représentant une patte de fixation conforme à l'invention ;
- la figure 9 est une vue similaire à celle de la figure 3, représentant l'agencement comportant la patte de fixation représentée à la figure 8.

Pour la description de l'invention, on adoptera à titre non limitatif les orientations verticale, longitudinale et transversale selon le repère V, L, T indiqué aux figures.

On adoptera aussi l'orientation d'avant en arrière comme étant la direction longitudinale et de gauche à droite en se reportant à la figure 1.

Dans la description qui va suivre, des éléments identiques, similaires ou analogues seront désignés par les mêmes chiffres de référence.

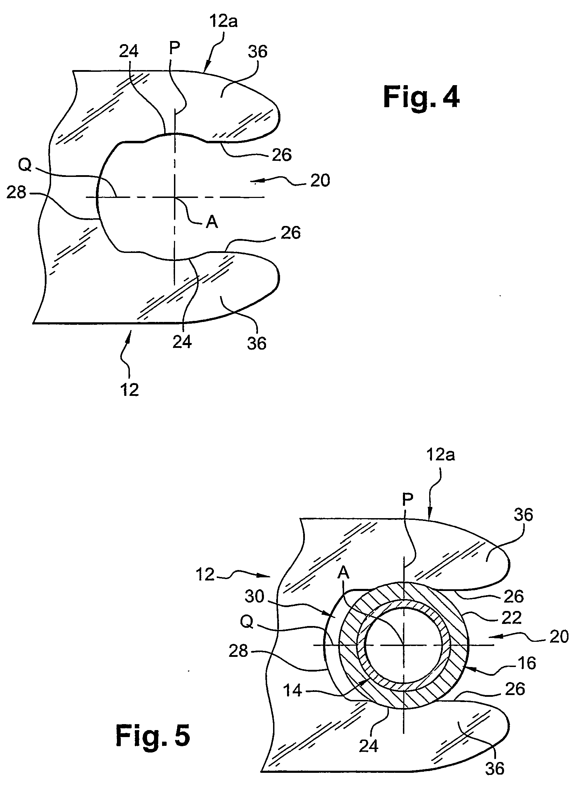

On a représenté à la figure 4 l'extrémité avant 12a d'une patte de fixation 12 conforme à l'invention, qui comporte un logement 20 dans lequel est reçu le fond 22 de la gorge périphérique 18 de l'élément amortisseur 16.

Le logement 20 est délimité par deux tronçons concaves 24, par deux tronçons longitudinaux avant 26, et un tronçon arrière 28 de raccordement des tronçons concaves 24.

Conformément à l'invention, et comme le voir plus en détail à la figure 5, le logement 20 est conformé de manière qu'il existe un jeu longitudinal entre le tronçon arrière 28 du logement 20 et le fond 22 de la gorge 18.

Ce jeu permet à l'élément amortisseur 16 de se déformer librement à l'intérieur du volume 30 qui est ainsi formé à l'arrière du logement 20, et par conséquent, l'élément amortisseur 16 se déforme de manière symétrique par rapport à son axe vertical A, améliorant le positionnement de la patte de fixation 12 coaxialement à ce même axe vertical A.

Selon un premier mode de réalisation du logement 20, représenté aux figures 4 et 5, les tronçons concaves 24 sont en forme de arc de cercle centré sur l'axe vertical A de l'entretoise 14. Cela permet d'avoir une grande zone de contact entre le fond 22 de la gorge périphérique 18 et les tronçons concaves 24.

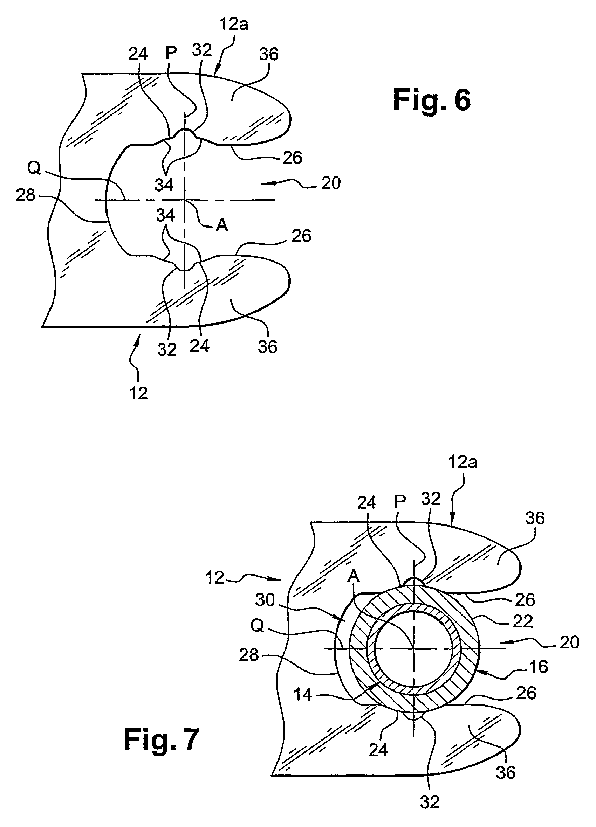

Selon un autre mode de variation du logement 20 représenté aux figures 6 et 7, les tronçons concaves 24 comportent chacun un renfoncement radial 32 d'axe principal transversal, à l'intérieur desquels l'élément amortisseur 16 est apte à se déformer, pour améliorer encore le positionnement de la patte de fixation 12.

Chaque renforcement 32 divise le tronçon concave 24 associés en deux segments 34 d'appui contre le fond 22 de la gorge 18.

Selon un mode de réalisation préféré, les segments 34 d'un même tronçon concave 24 sont symétriques par rapport à un plan axial transversal P, c'est-à-dire que chaque tronçon concave 24 comporte une symétrie par rapport à ce plan axial transversal P.

De plus, le logement 20 comporte une symétrie par rapport à un plan axial longitudinal Q, c'est-à-dire que les deux tronçons concaves 24 sont symétriques par rapport à ce plan axial longitudinal Q.

Ainsi, la répartition des segments 34 permet d'assurer une déformation symétrique de l'élément amortisseur 16 à l'intérieur du logement 20, ne nuisant donc pas au positionnement de la patte de fixation 12 par rapport à l'axe vertical A.

Le jeu longitudinal entre le tronçon arrière 28 du logement 20 et le fond 22 de la gorge 18 permet une déformation de l'élément amortisseur 16 dans le volume 30 ainsi formé. Cependant, le logement 20, qui divise l'extrémité avant 12a de la patte de fixation 12 en deux branches longitudinales 36, est prolongé longitudinalement vers l'arrière, c'est-à-dire que ce jeu longitudinal augmente la longueur des branches longitudinales 36.

L'accroissement de la longueur des branches longitudinales 36 diminue la rigidité du maintien de l'élément amortisseur 16 dans le logement 20, et donc diminue la rigidité de l'extrémité avant 12a de la patte de fixation 12.

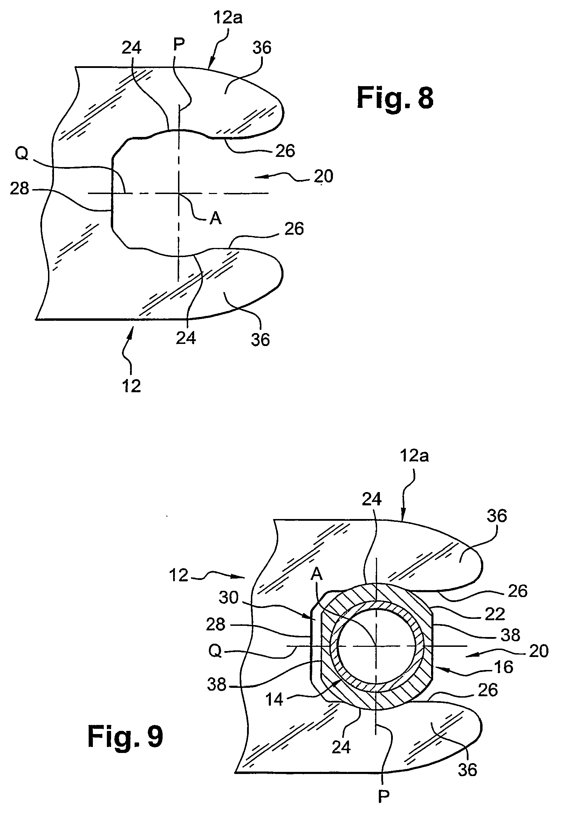

Pour réduire la longueur du logement 20, comme on l'a représenté aux figures 8 et 9, le fond 22 de la gorge périphérique 18 comporte un méplat 38 qui s'étend dans un plan vertical transversal en vis-à-vis du tronçon arrière 28 du logement.

Ce méplat 38 permet d'avoir un tronçon arrière 28 globalement rectiligne et d'orientation principale transversale.

La présence de ce méplat 38 nécessite néanmoins de positionner angulairement l'élément amortisseur 16 autour de l'axe vertical A. Cependant, pour faciliter ce positionnement, l'élément amortisseur 16 comporte deux méplat 38 qui sont symétriques par rapport à l'axe vertical A.

## Revendications

1. Agencement pour le montage et la fixation d'une platine de support (10), notamment d'une platine de support (10) d'un mécanisme d'essuie-glace, à un élément de structure de caisse d'un véhicule automobile, qui comporte :
- une entretoise (14), de forme globalement cylindrique de révolution d'axe principal vertical (A), qui est fixée à l'élément de structure de caisse, et
- une patte de fixation (12) globalement horizontale qui est réalisée venue de matière avec la platine de support (10), qui s'étend selon une direction principale longitudinale vers l'avant depuis la platine de support (10), et dont l'extrémité longitudinale avant (12a) est fixée à l'entretoise (14) par l'intermédiaire d'un élément amortisseur (16) interposé entre la patte de fixation (12) et l'entretoise (14),
l'agencement étant du type dans lequel :
- l'élément amortisseur (16) est un élément de forme tubulaire coaxial à l'entretoise, dont la paroi cylindrique externe comporte une gorge périphérique (18) contre le fond (22) de laquelle la patte de fixation (12) est en appui,
- l'extrémité avant de la patte de fixation (12) comporte un logement en "C" (20) dans lequel l'élément amortisseur (16) est reçu, qui est délimité par deux tronçons concaves (24) opposés et complémentaires du fond (22) de la gorge périphérique (18), pour réaliser le positionnement de la patte de fixation (12) coaxialement à l'élément amortisseur (16), deux tronçons avant (26) dont la distance moyenne entre les tronçons avant (26) est inférieure au diamètre externe du fond (22) de la gorge périphérique (18), pour réaliser le blocage de l'élément amortisseur (16) dans le logement en "C" (20), et un tronçon arrière (28) de raccordement des tronçons concaves (24),
**caractérisé en ce qu'**il existe un jeu longitudinal entre le tronçon arrière (28) et le fond (22) de la gorge périphérique (18).

2. Agencement selon la revendication précédente, **caractérisé en ce que** chaque tronçon concave (24) consiste en un arc de cercle centré sur l'axe vertical A de l'entretoise (14).

3. Agencement selon l'une quelconque des revendications précédentes, **caractérisé en ce que** chaque tronçon concave (24) comporte un décrochement radial (32) d'axe principal transversal.

4. Agencement selon l'une quelconque des revendications précédentes, **caractérisé en ce que** chaque tronçon concave (24) est symétrique par rapport à un plan (P) transversal axial.

5. Agencement selon l'une quelconque des revendications précédentes, **caractérisé en ce que** le logement en "C" (20) est symétrique par rapport à un plan (Q) longitudinal axial.

6. Agencement selon l'une quelconque des revendications précédentes, **caractérisé en ce que** l'élément amortisseur (16) comporte un méplat (38) transversal vertical arrière situé en vis-à-vis du tronçon arrière (28) du logement en "C" (20).

## Claims

1. Arrangement for the installation and attachment of a support plate (10), in particular of a support plate (10) for a windscreen wiper mechanism, to a body structure element of a motor vehicle, which comprises:
- a spacer (14), with an overall cylindrical shape that rotates about a vertical main axis (A), which is fixed to the body structure element, and
- an overall horizontal attachment tab (12) which is made as single part with the support plate (10), which extends following a longitudinal main direction towards the front from the support plate (10), and in which the front longitudinal end (12a) is attached to the spacer (14) by means of a shock absorber element (16) placed between the attachment tab (12) and the spacer (14),
the arrangement being of the type in which:
- the shock absorber element (16) is an element with a tubular shape that is coaxial in relation to the spacer, in which the outer cylindrical wall comprises a peripheral groove (18), with the attachment tab (12) resting against the bottom (22) of said groove,
- the front end of the attachment tab (12) comprises a C-shaped housing (20) in which the shock absorber element (16) is accommodated, which is delimited by two concave sections (24) that are opposite to each other and complement the bottom (22) of the peripheral groove (18), so as to position the attachment tab (12) coaxially in relation to the shock absorber element (16), two front sections (26) in which the average distance between the front sections (26) is less than the outer diameter of the bottom (22) of the peripheral groove (18), in order to provide the blocking of the shock absorber element (16) in the C-shaped housing (20), and a rear section (28) connecting the concave sections (24),
**characterised in that** longitudinal free play exists between the rear section (28) and the bottom (22) of the peripheral groove (18).

2. Arrangement according to the preceding claim, **characterised in that** each concave section (24) consists of an arc of circle centred on the vertical axis A of the spacer (14).

3. Arrangement according to any preceding claim, **characterised in that** each concave section (24) comprises a radial indentation. (32) with a transversal main axis.

4. Arrangement according to any preceding claim, **characterised in that** each concave section (24) is symmetrical in relation to a transversal axial plane (P).

5. Arrangement according to any preceding claim, **characterised in that** the C-shaped housing (20) is symmetrical in relation to a longitudinal axial plane (Q).

6. Arrangement according to any preceding claim, **characterised in that** the shock absorber element (16) comprises a rear vertical transversal flat section (38) located opposite the rear section (28) of the C-shaped housing (20).

## Patentansprüche

1. Anordnung für die Montage und Befestigung einer Tragplatte (10), insbesondere einer Tragplatte (10) eines Scheibenwischermechanismus, an ein Strukturelement der Karosserie eines Kraftfahrzeugs vorgeschlagen, die folgende Elemente umfaßt:
- Eine Abstandshülse (14) mit insgesamt zylindrischer Form mit Umdrehung der vertikalen Hauptachse (A), die am Strukturelement der Karosserie befestigt ist,
- Eine insgesamt horizontale Befestigungslasche (12), die einstückig mit der Tragplatte (10) ausgeführt ist, die sich ab der Tragplatte (10) in einer Hauptrichtung längs nach vorne erstreckt, und deren vorderes längliches Ende (12a) vermittels eines zwischen der Befestigungslasche (12) und der Abstandshülse (14) eingefügten Dämpferelements (16) an der Abstandshülse (14) befestigt ist,
wobei die Anordnung von der Art ist, bei der:
- Das Dämpferelement (16) ein röhrenförmiges Element koaxial zur Abstandshülse ist, deren äußere zylinderförmige Wand eine periphere Kehle (18) umfaßt, an deren Boden (22) die Befestigungslasche (12) anliegt;
- Das vordere Ende der Befestigungslasche (12) eine Aufnahme in "C"-Form (20) umfaßt, in der das Dämpferelement (16) aufgenommen wird, das durch zwei konkave Abschnitte (24) begrenzt ist, die entgegengesetzt und ergänzend zum Boden (22) der peripheren Kehle (18) sind, um die Positionierung der Befestigungslasche (12) koaxial zum Dämpferelement (16) auszuführen, zwei vordere Abschnitte (26), deren durchschnittlicher Abstand zwischen den vorderen Abschnitten (26) geringer als der Außendurchmesser des Bodens (22) der peripheren Kehle (18) ist, um die Blockierung des Dämpferelements (16) in der Aufnahme "C" (20) und einen hinteren Abschnitt (28) zum Anschluß der konkaven Abschnitte (24) zu realisieren,
**dadurch gekennzeichnet, daß** ein Längsspiel zwischen dem hinteren Abschnitt (28) und dem Boden (22) der periphere Kehle (18) besteht.

2. Anordnung nach vorstehendem Anspruch, **dadurch gekennzeichnet, daß** jeder konkave Abschnitt (24) aus einem Kreisbogen besteht, der auf die vertikale Achse A der Abstandshülse (14) zentriert ist.

3. Anordnung nach einem beliebigen der vorstehenden Ansprüche, **dadurch gekennzeichnet, daß** jeder konkave Abschnitt (24) einen radialen Absatz (32) der Hauptquerachse umfaßt.

4. Anordnung nach einem beliebigen der vorstehenden Ansprüche, **dadurch gekennzeichnet, daß** jeder konkave Abschnitt (24) symmetrisch zu einer axialen Querebene (P) ist.

5. Anordnung nach einem beliebigen der vorstehenden Ansprüche, **dadurch gekennzeichnet, daß** die Aufnahme in "C" (20) symmetrisch zu einer axialen Längsebene (Q) ist.

6. Anordnung nach einem beliebigen der vorstehenden Ansprüche, **dadurch gekennzeichnet, daß** das Dämpferelement (16) eine hintere vertikale quer liegende Flachstelle (38) umfaßt, die sich gegenüber dem hinteren Abschnitt (28) der Aufnahme in "C" (20) befindet.
